# EUROPEAN PATENT APPLICATION

(11) **EP 4 575 611 A1**
(43) Date of publication of application: **25.06.2025**
(21) Application number: 24207702.2
(22) Date of filing: 21.10.2024
(51) Int. Cl.: G02B 27/01, G02B 27/00

(54) **EYE-TRACKING SYSTEM AND METHOD**

(30) Priority: 19.12.2023 FI 20236394
(71) Applicant: Pixieray Oy, 02630 Espoo (FI)
(72) Inventor: Melakari, Klaus, 02140 Espoo (FI)
(74) Representative: Moosedog Oy

(57) **Abstract**

Disclosed is a light-sensing arrangement (100) for an eye-tracking system. The light-sensing arrangement includes a light sensor (102) including a plurality of light-sensitive elements (104a, 104b, 104c) which collectively form a light-sensitive surface (106) of the light sensor (102). Further, the light-sensing arrangement includes a light collimation element 108 arranged on the light-sensitive surface of the light sensor (102). The light collimation element defines an angle of acceptance (θₐ) for each light-sensitive element of the light sensor to lie within a field of view (θₜ) of said light-sensitive element in which a user's eye (112) is expected to be present.

## Description

### TECHNICAL FIELD

The present disclosure relates to an eye-tracking system and a light-sensing arrangement for an eye-tracking system. Furthermore, the present disclosure relates to a method for eye-tracking.

### BACKGROUND

Eye tracking sensors are becoming increasingly important for a wide range of applications, including virtual reality, augmented reality, and human-computer interaction. The eye tracking sensors measure and record the position and/or movements of the eyes to infer a user's visual attention. However, integrating an eye tracking sensor into eyeglasses or augmented reality glasses is challenging due to the limited space available. One of the key challenges is to maximize light-collecting area of the eye tracking sensor while minimizing its overall size. An eye tracking sensor with a large area is sensitive to light arriving from all angles, which can lead to noise and reduce the accuracy of data collected by the eye tracking sensors, that is, eye tracking data.

Conventionally, various techniques have been employed to collimate an angle of acceptance of light to the eye-tracking sensor to reduce noise and increase the accuracy of the eye-tracking data, including reflectors, lenses, and prisms. However, such conventional approaches often add significant thickness to the eye tracking system, making it difficult to fit into the narrow area of eyeglasses or augmented reality glasses. Thus, there exists a technical problem of how to maximize the light collecting area of conventional eye tracking sensors while minimizing the overall size and maintaining a compact profile for integration into narrow-area devices, such as eyeglasses or augmented reality glasses.

Therefore, in light of the foregoing discussion, there exists a need to overcome the aforementioned drawbacks associated with the conventional eye tracking sensors.

### SUM MARY

The aim of the present disclosure is to provide a system and method to maximize the light-collecting area of conventional eye tracking sensors while minimizing the overall size and maintaining a compact profile for integration into narrow-area devices such as eyeglasses or augmented reality glasses. The aim of the present disclosure is achieved by an eye-tracking system, a light-sensing arrangement for an eye-tracking system, and a method for eye tracking as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers, or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1A is a schematic illustration of a light-sensing arrangement for an eye-tracking system, in accordance with an embodiment of the present disclosure;
FIG. 1B is a schematic illustration of a light sensitive element in the light-sensing arrangement for an eye-tracking system, in accordance with an embodiment of the present disclosure;
FIG. 2 is a schematic illustration of an eye-tracking system, in accordance with an embodiment of the present disclosure;
FIG. 3 is a schematic illustration of a light-emitting unit of an eye-tracking system, in accordance with an embodiment of the present disclosure; and
FIG. 4 illustrates steps of a method of eye tracking, in accordance with another embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a light-sensing arrangement for an eye-tracking system. The light-sensing arrangement comprising:
a light sensor comprising a plurality of light-sensitive elements which collectively form a light-sensitive surface of the light sensor; and
a light collimation element arranged on the light-sensitive surface of the light sensor, wherein the light collimation element defines an angle of acceptance for each light-sensitive element of the light sensor to lie within a field of view of said light-sensitive element in which a user's eye is expected to be present.

The present disclosure provides the aforementioned light-sensing arrangement for the eye-tracking system, which comprises the light collimation element. The light collimation element is configured to collimate light rays from a wide angular range (defined by the angle of acceptance) into a parallel beam, that is, the light rays are focused on a specific direction, which reduces the amount of stray light that can reach the light sensor. Notably, the light collimation element defines the angle of acceptance such that a balance is struck between reducing the stray light that can reach the light sensor (i.e., reducing noise) as well increasing an effective light collecting area of the light-sensing element. Therefore, the light collimation element improves the signal-to-noise ratio of the light sensor and allows for a more compact design for the eye-tracking system. The light collimation element is implemented and arranged in the light-sensing arrangement such that the light-sensing arrangement has a compact profile (and thus can be easily integrated into devices having compact-space design constraints). The light collimation element defines the angle of acceptance of the light sensor to lie within the field of view in which the user's eye is expected to be present, which enables the eye-tracking system to focus on the desired light from the user's eye while rejecting stray light sources and ambient illumination.

In a second aspect, the present disclosure provides an eye-tracking system comprising:
a plurality of light-emitting units;
a light sensing arrangement comprising:
   a light sensor comprising a plurality of light-sensitive elements which collectively form a light-sensitive surface of the light sensor; and
   a light collimation element arranged on the light-sensitive surface of the light sensor, wherein the light collimation element defines an angle of acceptance (θₐ) for each light-sensitive element of the light sensor to lie within a field of view (θₜ) of said light-sensitive element in which a user's eye is expected to be present; and
at least one processor configured to:
   control the plurality of light-emitting units to emit the light towards the user's eye;
   collect sensor data, wherein the sensor data comprises information of reflections of the emitted light from the user's eye, wherein the reflections are received by the light sensor within the angle of acceptance for each light-sensitive element; and
   process the collected sensor data to determine a gaze direction of the user's eye.

In a third aspect, the present disclosure provides a method comprising:
controlling a plurality of light-emitting units to emit light towards a user's eye;
collecting sensor data from a light sensor, wherein the sensor data comprises information of reflections of the emitted light from the user's eye,
wherein the reflections are received by the light sensor within an angle of acceptance defined by a light collimation element for each light-sensitive element from a plurality of light sensitive elements of the light sensor; and
processing the collected sensor data to determine a gaze direction of the user's eye.

The aforementioned eye-tracking system and the aforementioned method enable determining the gaze direction of the user's eye, which provides accurate, real-time, and context-aware tracking of the user's eye movements. The processor in the eye-tracking system and the method ensures precise coordination of the emitted light by controlling the parameters of the plurality of light-emitting units, such as timing, intensity, and color of the emitted light, which provides reliable and controlled illumination of the user's eyes. The determination of the gaze-direction ensures that the eye-tracking system can adapt quickly to changes in the user's gaze, making the eye-tracking system and the method suitable for implementing in interactive applications such as gaming, VR/AR, and other dynamic environments. By adhering to the predefined angle of acceptance for each light-sensitive element, the eye-tracking system and the method optimize the accuracy and reliability of gaze direction determination (by collecting light rays within the angle of acceptance) and prevent the collection of irrelevant data outside the accepted angles. The eye-tracking system provided herein is compact in size, due to the compact design profile of the light-sensing arrangement.

Throughout the present disclosure, the term "eye *tracking system"* refers to a device for measuring and recording the position and movement of a user's eyes. The data related to the position and movement of eyes can be used for a variety of purposes, including user experience (UX) research, virtual reality (VR) and augmented reality (AR), human-computer interaction (HCI) and the like. By tracking where the user is looking, VR and AR systems adjust the virtual or augmented environment accordingly. Further, the term *"light-sensing arrangement"* refers to the hardware components responsible for detecting and analyzing light reflected from the user's eye. The light sensing arrangement is responsible for collecting and processing the reflected light data that is used to determine the position and movement of the eye.

The light sensing arrangement comprises the light sensor. The light sensor further comprises a plurality of light-sensitive elements which collectively form the light-sensitive surface of the light sensor. The term *"light sensor"* refers to a device, which detects the light signals and measure the light intensity of said light signals, by converting an energy of the light signals into corresponding electrical signals that can be measured and analysed. Examples of such light sensors may include, but are not limited to, photodiodes, phototransistors, and photoresistors. The light signals emanate from active light sources and/or passive light sources in the real-world environment. Examples of such active light sources may include, but are not limited to, light emitting diode (LED) lights, infrared lights, incandescent bulbs. Examples of such passive light source may include, but are not limited to, reflective surfaces like mirrors and/or polished metals, surfaces that reflect ambient light, and sun.

It will be appreciated that the "plurality of light-sensitive elements" could be arranged in a required manner (for example, such as a rectangular two-dimensional (2D) grid, a polygonal arrangement, a circular arrangement, an elliptical arrangement, a freeform arrangement, and the like) to form the photo-sensitive surface of the light sensor.

The light-sensing arrangement further comprises the light collimation element arranged on the light-sensitive surface of the light sensor. Throughout the present disclosure, *"the light collimation element"* refers to an optical component that is configured to focus light rays into a parallel beam. Examples of the light collimation element may include, but are not limited to reflectors, lenses, collimating films and the like.

Optionally, the light collimation element is implemented as one of: a prismatic film, a fibre optic plate-based film, a privacy filter film, a combination of lenticular arrays and aperture arrays. The prismatic film refers to a thin optical film that consists of a series of microstructure elements, such as prisms or pyramid-shaped structures. Such prisms or pyramid-shaped structures are designed to diffract light rays in a controlled manner, effectively collimating the light into the parallel beam. The microstructure elements in the prismatic film can be precisely designed and tailored to control the direction and angle of light collimation. Moreover, the prismatic film is flexible, and thus it can be applied to curved or irregular surfaces. The light collimation element implemented as the prismatic film can be easily integrated into any optical system. The prismatic film can be produced using simple manufacturing techniques.

The fiber optic plate-based film refers to a type of light collimation element that utilizes a layer of optical fibers embedded within a polymer matrix. The structure of the fiber optic plate-based film allows the film to effectively collimate light rays into the parallel beam. The optical fibers therein precisely guide light with minimal loss (i.e., with minimal scattering), thus enhancing the efficiency of the light-sensing arrangement. The privacy filter film refers to a type of optical film that is designed to obscure the view of a screen from off-axis angles, which avoids visibility of the screen to the user not directly in front of the screen. The privacy filter film operates on a scattering effect, which reduces the contrast of the image when viewed from off-axis angles, making it difficult to see the details of what is being displayed. The privacy filter film enables effective directional light control for reducing noise, by allowing light to pass through it only when the light is incident thereon at the angle of acceptance (and blocking the light when it is incident thereon at any other angle). The lenticular array refers to a type of optical lens that uses a series of thin, cylindrical lenses to bend and focus light. The lenticular arrays can be used to collimate light from the eye onto the light sensor in a precise and efficient manner. This is achieved by designing the lenticular array to create a specific pattern of light rays that are focused onto the light sensor. The aperture array refers to a type of light collimation element that uses a series of small apertures or holes to focus light onto the light sensor. In an implementation, the aperture array is used in combination with lenticular arrays or reflectors to achieve high levels of accuracy and precision of light path control. The lenticular arrays direct the light into a path, and the aperture array refines this manner of directing light by precisely limiting angles at which the light enters the light sensor. This enhances the efficiency of the light-sensing arrangement.

The term *"angle of acceptance"* refers to a maximum angular range from which light can strike the light sensor and still be detected accurately.

The angle of acceptance of the light sensitive element is defined to lie within the field of view of the corresponding light sensitive element. This ensures that the light collimation element always allows passage of at least some light from the user's eye onto the light-sensitive element. Optionally, the angle of acceptance is from 0 degrees up to 30 degrees from a central axis of said light-sensitive element. By limiting the angle of acceptance within a specific range (i.e., a range which is less than the field of view), the apparatus focuses on effectively collecting the desired light from the user's eye while rejecting stray light sources and ambient illumination. As an example the angle of acceptance can be from from 0, 1, 2, 3, 4, 5, 6, 7, 8, 9, 10, 11, 12, 13, 14, 15, 16, 17, 18, 19, 20, 21, 22, 23, 24 ,25, 26, 27, 28, 29 degrees up to 1, 2, 3, 4, 5, 6, 7, 8, 9, 10, 11, 12, 13, 14, 15, 16, 17, 18, 19, 20, 21, 22, 23, 24 ,25, 26, 27, 28, 29 or 30 degrees. Such rejection reduces noise and improves the signal-to-noise ratio associated with the eye tracking system, which is essential for accurate eye tracking. In other words, the aforesaid range of the angle of acceptance achieves an efficient trade-off between light collection, and stray light rejection, which further leads to improvement in the accuracy of eye-tracking when the light-sensing arrangement is employed in the eye-tracking system. Optionally, the portion of the field of view of the light sensor in which the user's eye is expected to be present, is determined based on an angular extent of the field of view of the light sensor, and an arrangement of the light sensor with respect to the user's eyes. By considering both the angular extent of the field of view of the light sensor and how the light sensor is positioned concerning the user's eyes, the eye-tracking system identifies the specific portion of the field of view relevant to the user's expected eye position. Therefore, the aforesaid range of the angle of acceptance is defined to have an angular extent which would enable maximisation of the signal-to-noise ratio, given the design considerations of the components of the light-sensing arrangement and the eye-tracking system. Angle 0 refers to angle which is same direction as the central axis. 30 degrees refer to angle between the central axis and the angle. The central axis is perpendicular to surface of light-sensitive element.

Optionally, the light collimation element is arranged on the light-sensitive surface of the light sensor by: lamination, casting and injection moulding. Such techniques for arranging the light collimation element on the light-sensitive surface are simple (i.e., easy to implement), rapidly implemented and cost effective. Therefore, such techniques are well-suited for mass-production of the light-sensing arrangement. Moreover, these techniques allow for creation of intricate optical structures (that can be optimized to maximize light collimation and minimize losses), design flexibility, and modular implementation of the light collimation element (which facilitates ease of its replacement or upgrade). In an implementation, the light collimation element is a material layer insert in a casted or injection moulded structure along with the light sensor. In another implementation, the light collimation element is an outer layer (or top layer) of the apparatus.

Optionally, the light collimation element is configured to have one of a planar structure or a curved structure. The planar structure of the light collimation element is simple to design and manufacture, easy to arrange on the light-sensitive surface of the light sensor, and enables uniform collimation across its surface. The curved structure of the light collimation element assists in enhancing the performance of the light collimation element. The curved structure of the light collimation element can be optimized for non-planar light paths (such as light paths of the light reflected from the user's eye in the eye-tracking system). The curved structure of the light collimating element can effectively collect and collimate the light within the angle of acceptance for each light-sensitive element of the light sensor, and ensures that the light is focused onto the light sensor with minimal distortion or aberration. This enhances the accuracy of eye-tracking when the light-sensing arrangement is used in the eye-tracking system.

Optionally, a thickness of the light collimation element lies in a range of 200 micrometres to 1.5 millimetres. Due to such small thickness (in micrometers or millimetres) of the light collimation element, a compact design of the light-sensing arrangement is achieved, which in turn reduces the overall size of the eye tracking system by providing a very thin solution for light management during light sensing, whilst also maintaining optimum light collecting area. Such eye-tracking systems can thus be easily integrated into head-mounted devices (for example, such as extended-reality devices, eyeglass frames, and the like) where compactness and lightweight implementation are important requirements. The aforesaid range of thickness of the light collimation element optimizes collimation efficiency for light within the angle of acceptance, whilst effectively enabling rejection of noisy light outside the angle of acceptance. As an example the thickness of the light collimation element can in range of 200, 300, 400, 500, 600, 700, 800, 900, or 1000 micrometres up to 600, 700, 800, 900, 1000, 1100, 1200, 1300, 1400, or 1500 micrometres (1.5 millimetres)

Optionally, a thickness of the arrangement of the light collimation element and the plurality of light-sensitive elements of the light sensor lies in a range of 100 µm to 1 mm. The combined size of the light collimation element and the plurality of light-sensitive elements of the light sensor in micrometres or millimetres, as provided in the aforesaid range, offers a compact size of the light-sensing arrangement, which in turn enables a compact implementation of the eye-tracking system as compared to conventional eye-tracking sensors. As an example the thickness can be from 100, 200, 300, 400, 500, 600, 700, 800, or 900 micrometres up to 200, 300, 400, 500, 600, 700, 800, 900, or 1000 micrometres (1 millimetre).

The eye-tracking system comprises a plurality of light-emitting units. The term *"light-emitting units"* refers to a component or a device configured to emit lights into the user's eyes. Examples of the light-emitting units may include, but are not limited to, light emitting diodes (LEDs), laser diodes and the like. Optionally, each of the plurality of light-emitting units comprises at least one of:
- a light source operable to generate the light to be emitted towards the user's eye,
- a reflector operatively coupled to the light source for directing the generated light towards the user's eye, and
- a light collimating element operatively coupled to the reflector for collimating the directed light from the reflector towards the user's eye.

The term *"light source"* refers to a component within the plurality of light-emitting units, which is configured to generate the light emitted towards the user's eye. Examples of the light source may include, but are not limited to, light emitting diodes (LEDs), laser diodes, light bulbs, light modulators, and the like. The term *"reflector"* refers to a component within the plurality of light-emitting units, which is configured to reflect the light incident on a corresponding surface (i.e., reflective surface). Examples of the reflector may include, but are not limited to, mirrors, reflectors, and the like. In operation, each light-emitting unit has the light source that produces light, which is then directed by the reflector towards the user's eye. Additionally, the light collimating element is configured to further refine and focus the directed light towards the user's eye. In this way, a well-focused beam of light is incident upon the user's eye for enabling eye-tracking, which causes reflections of said light to also be similarly well-focused and lie substantially within the angle of acceptance of the plurality of light-sensitive elements. This improves the efficiency of the light-sensing arrangement, which in turn improves the accuracy of the eye-tracking system. The light source, the reflector and the light collimating element together provide precise and controlled illumination for the eye-tracking system. A light-emitting unit including such components provides flexibility in designing the eye-tracking system since light originating from the light source outside of a field of view of the eye can also be effectively directed as collimated light towards the eye.

The eye-tracking system further includes the at least one processor. In an implementation, the at least one processor is communicatively coupled to the plurality of light-emitting units and the light sensor. The term *"processor"* refers to a computational element that is operable to respond to and processes instructions that drive the apparatus. The processor may refer to one or more individual processors, processing devices, and various elements associated with a processing device that may be shared by other processing devices. Additionally, the one or more individual processors, processing devices, and elements are arranged in various architectures for responding to and processing the instructions that drive the processor. Examples of the processor may include but are not limited to, a hardware processor, a digital signal processor (DSP), a microprocessor, a microcontroller, a complex instruction set computing (CISC) processor, an application-specific integrated circuit (ASIC) processor, a reduced instruction set (RISC) processor, a very long instruction word (VLIW) processor, a state machine, a data processing unit, a graphics processing unit (GPU), and other processors or control circuitry.

In operation, the at least one processor is configured to control the plurality of light-emitting units to emit the light towards the user's eye. In an implementation, the at least one processor transmits communication signals to each of the plurality of light-emitting units to turn off or turn on the light towards the user's eye. Further, the at least one processor is configured to collect sensor data. The sensor data refers to information collected by the light sensor. The sensor data comprises information of reflections of the emitted light from the user's eye. In other words, the light emitted by the light emitting units is incident on the user's eyes and the light reflected from the user's eyes is recorded by the light sensor. Moreover, the light sensor transmits the information regarding the reflected light to the at least one processor. In an implementation, the information regarding the reflected light includes the position and movement of the user's eyes. In addition, the reflections are received by the light sensor within the angle of acceptance for each light-sensitive element. The angle of acceptance for each light-sensitive element provides the predetermined range of angles within which the light sensor is designed to receive light effectively. Furthermore, the at least one processor is configured to process the collected sensor data to determine the gaze direction of the user's eye. The term "gaze direction" refers to the orientation or line of sight of the user's eyes. The determination of the gaze direction involves analyzing data from the light sensor that captures reflections of emitted light from the user's eyes. By determining the gaze direction, the eye-tracking system enables enhanced display of virtual objects or information to the user, as the user's gaze direction indicates the direction in which the user's eyes are oriented.

The present disclosure also relates to the method as described above. Various embodiments and variants disclosed above, with respect to the aforementioned apparatus, apply mutatis mutandis to the method.

Optionally, each of the plurality of light-emitting units comprises at least one of: a light source operable to generate the light to be emitted towards the user's eye, a reflector operatively coupled to the light source for directing the generated light towards the user's eye, and a light collimating element operatively coupled to the reflector for collimating the directed light from the reflector towards the user's eye. The term *"light source"* refers to a component within the plurality of light-emitting units, which is configured to generate the light emitted towards the user's eye. Examples of the light source may include, but are not limited to, light emitting diodes (LEDs), laser diodes, light bulbs, light modulators, and the like. The term *"reflector"* refers to a component within the plurality of light-emitting units, which is configured to reflect the light incident on a corresponding surface (i.e., reflective surface). Examples of the reflector may include, but are not limited to, mirrors, reflectors, and the like. In operation, each light-emitting unit has the light source that produces light, which is then directed by the reflector towards the user's eye. Additionally, the light collimating element is configured to further refine and focus the directed light. The light source, the reflector and the light collimating element together provide precise and controlled illumination during execution of the aforementioned method.

Optionally, the light collimation element is implemented as one of: a prismatic film, a fibre optic plate-based film, a privacy filter film, a combination of lenticular arrays and aperture arrays. The prismatic film refers to a thin optical film that consists of a series of microstructure elements, such as prisms or pyramid-shaped structures. Such prisms or pyramid-shaped structures are designed to diffract light rays in a controlled manner, effectively collimating the light into the parallel beam.

The fiber optic plate-based film refers to a type of light collimation element that utilizes a layer of optical fibers embedded within a polymer matrix. The structure of the fiber optic plate-based film allows the film to effectively collimate light rays into the parallel beam. The privacy filter film refers to a type of optical film that is designed to obscure the view of a screen from off-axis angles, which avoids visibility of the screen to the user not directly in front of the screen. The privacy filter film operates on a scattering effect, which reduces the contrast of the image light when viewed from off-axis angles, making it difficult to see the details of what is being displayed. The lenticular array refers to a type of optical lens that uses a series of thin, cylindrical lenses to bend and focus light. The lenticular arrays can be used to collimate light from the eye onto the light sensor in a precise and efficient manner. This is achieved by designing the lenticular array to create a specific pattern of light rays that are focused onto the light sensor. The aperture array refers to a type of light collimation element that uses a series of small apertures or holes to focus light onto the light sensor. In an implementation, the aperture array is used in combination with lenticular arrays or reflectors to achieve high levels of accuracy and precision.

Optionally, the light collimation element is configured to have one of a planar structure or a curved structure. The curved structure of the light collimation element increases focus of the light rays from the user's eye towards the light sensitive elements, thereby enhancing the performance of the light collimation element.

Optionally, a thickness of the light collimation element lies in a range of 200 micrometres to 1.5 millimetres. The thickness of the light collimation element can be, for example, from 200 micrometers, 300 micrometers, 400 micrometers, 500 micrometers to 600 micrometers, 700 micrometers, 800 micrometers, 900 micrometers, 1 millimetres or 1.5 millimetres. Due to small thickness (in millimetres) of the light collimation element the overall size of the eye tracking system is reduced by maintaining optimum light collecting area.

Optionally, a thickness of the arrangement of the light collimation element and the plurality of light-sensitive elements of the light sensor lies in a range of 100 µm to 1 mm. The thickness of the arrangement of the light collimation element and the plurality of light-sensitive elements of the light sensor can be, for example, 100 µm, 200 µm, 300 µm, 400 µm to 500 µm, 600 µm, 700 µm, 800 µm, 900 µm, or 1 mm. The combined size of the light collimation element and the plurality of light-sensitive elements of the light sensor in millimetres offers a compact size of the eye-tracking system as compared to conventional eye-tracking sensors.

### DETAILED DESCRIPTION OF THE DRAWINGS

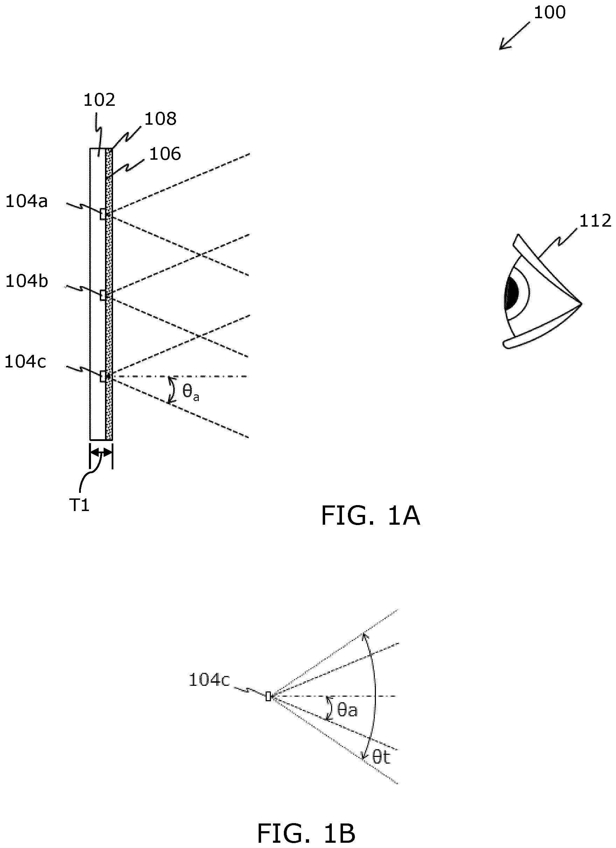

Referring to FIG. 1A, shown is a schematic illustration of a light-sensing arrangement **100** for an eye-tracking system, in accordance with an embodiment of the present disclosure. The light-sensing arrangement **100** includes a light sensor **102.** The light sensor **102** includes a plurality of light-sensitive elements **104a, 104b, 104c.** The plurality of light-sensitive elements **104a, 104b, 104c** collectively form a light-sensitive surface **106** of the light sensor **102.**

Further, the light-sensing arrangement **100** includes a light collimation element **108** arranged on the light-sensitive surface **106** of the light sensor **102.** The combined thickness of the light sensor **102** and the light collimation element **108** is denoted as **T1.** The light collimation element **108** defines an angle of acceptance **θₐ** for each light-sensitive element of the light sensor **102** to lie within a field of view of said light-sensitive element in which a user's eye **112** is expected to be present.

It may be understood by a person skilled in the art that the FIG. 1 includes a simplified architecture of the light-sensing arrangement **100** for the sake of clarity, which should not unduly limit the scope of the claims herein. It is to be understood that a specific implementation of the light-sensing arrangement **100** is provided as an example only. The person skilled in the art will recognize many variations, alternatives, and modifications of embodiments of the present disclosure.

Referring to FIG. 1B, shown is a schematic illustration of a light sensitive element **104C** in the light-sensing arrangement **100** (of FIG. 1A) for an eye-tracking system, in accordance with an embodiment of the present disclosure. The light collimation element **108** (of FIG. 1A) defines the angle of acceptance **θₐ** for the light-sensitive element **104C** lies within a field of view **θₜ** of the light-sensitive element **104C** in which a user's eye is expected to be present. The magnitude of the angle of acceptance **θₐ** is lesser than the magnitude of the field of view **θₜ.**

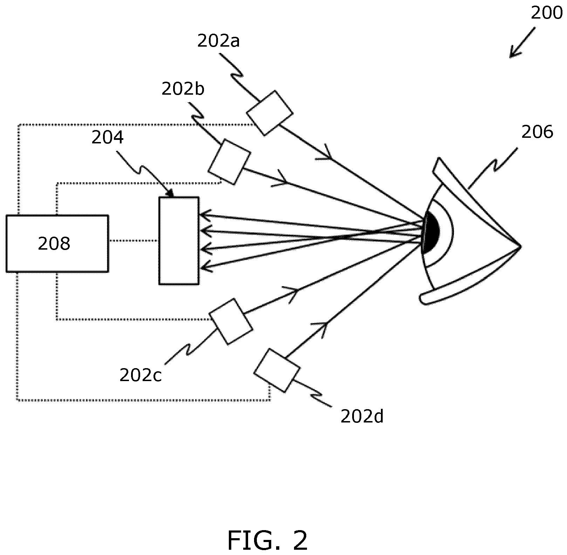

Referring to FIG. 2, shown is a schematic illustration of an eye-tracking system **200,** in accordance with an embodiment of the present disclosure. The eye-tracking system **200** includes a plurality of light-emitting units **202a, 202b, 202c, 202d** and a light-sensing arrangement **204.** The light-sensing arrangement **204** includes the light sensor **102** (of FIG. 1A), the light collimation element **108** (of FIG. 1) and a processor **208.** The light sensor **102** includes the plurality of light-sensitive elements **104a, 104b, 104c** (of FIGs. 1A and 1B), which collectively form the light-sensitive surface **106.** The light collimation element defines the angle of acceptance **θₐ** (of FIG. 1A) for each light-sensitive element of the light sensor **102** to lie within the field of view **θₜ** (of FIG. 1B) of said light-sensitive element in which a user's eye **206** is expected to be present. The processor **208** is configured to control the plurality of light-emitting units **202a, 202b, 202c, 202d** to emit the light towards the user's eye **206.** Further, the processor **208** is configured to collect sensor data. The sensor data includes information of reflections of the emitted light from the user's eye **206.** In addition, the processor **208** is configured to process the collected sensor data to determine a gaze direction of the user's eye **206.**

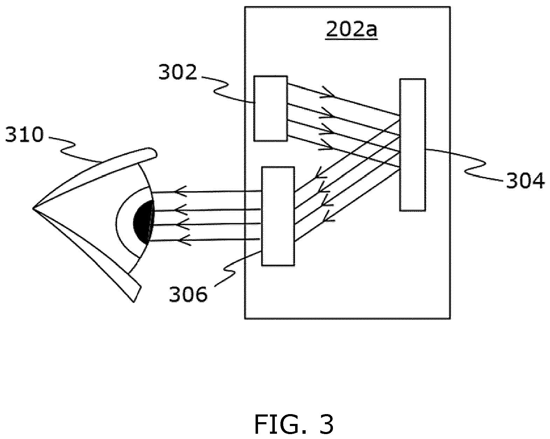

Referring to FIG. 3, shown is a schematic illustration of a light-emitting unit **202a** of the eye-tracking system **200** (of FIG. 2), in accordance with an embodiment of the present disclosure. The light-emitting unit **202a** includes a light source **302** operable to generate the light to be emitted towards a user's eye **310** and a reflector **304** operatively coupled to the light source **302** for directing the generated light towards the user's eye **310.** In addition, the light-emitting unit **202a** includes a light-collimating element **306** operatively coupled to the reflector **304** for collimating the directed light from the reflector **304** towards the user's eye **310.**

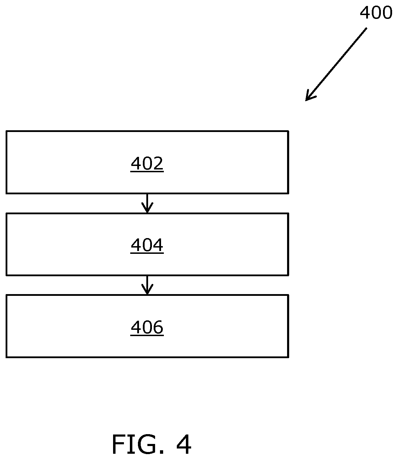

FIG. 4 illustrates steps of a method **400** of eye tracking, in accordance with another embodiment of the present disclosure. At step **402,** the method **400** includes controlling the plurality of light-emitting units **202a, 202b, 202c, 202d** (of FIG. 2) to emit light towards the user's eye 112 (of FIG. 1A), **206** (of FIG. 2), **310** (of FIG. 3). At step **404,** the method **400** includes collecting sensor data from the light sensor **102** (of FIG. 1A). The sensor data includes information of reflections of the emitted light from the user's eye **112, 206, 310.** The reflections are received by the light sensor **102** within the angle of acceptance **θₐ** (of FIG. 1A) defined by the light collimation element **108** (of FIG. 1A) for each light-sensitive element from a plurality of light-sensitive elements **104a, 104b, 104c** (of FIG. 1) of the light sensor **102.** Furthermore, at step **406,** the method **400** includes processing the collected sensor data to determine a gaze direction of the user's eye **112, 206, 310.**

## Claims

1. A light-sensing arrangement (100) for an eye-tracking system, the light-sensing arrangement comprising:
a light sensor (102) comprising a plurality of light-sensitive elements (104a, 104b, 104c) which collectively form a light-sensitive surface (106) of the light sensor (102); and
a light collimation element (108) arranged on the light-sensitive surface of the light sensor (102), wherein the light collimation element defines an angle of acceptance (θₐ) for each light-sensitive element of the light sensor (102) to lie within a field of view (θₜ) of said light-sensitive element in which a user's eye (112) is expected to be present.

2. The light-sensing arrangement (100) of claim 1, wherein the angle of acceptance (θₐ) is from 0 degrees up to 30 degrees from a central axis of said light-sensitive element.

3. The light-sensing arrangement (100) of any of the preceding claims, wherein the light collimation element (108) is implemented as one of: a prismatic film, a fibre optic plate-based film, a privacy filter film, a combination of lenticular arrays and aperture arrays.

4. The light-sensing arrangement (100) of any of the preceding claims, wherein the light collimation element (108) is arranged on the light-sensitive surface (106) of the light sensor (102) by: lamination, casting, and injection moulding.

5. The light-sensing arrangement (100) of any of the preceding claims, wherein the light collimation element (108) is configured to have one of a planar structure or a curved structure.

6. The light-sensing arrangement (100) of any of the preceding claims, wherein a thickness of the light collimation element (108) lies in a range of 200 micrometres to 1.5 millimetres.

7. The light-sensing arrangement (100) of any of the preceding claims, wherein a thickness (T1) of the arrangement of the light collimation element (108) and the plurality of light-sensitive elements of the light sensor (102) lies in a range of 100 µm to 1 mm.

8. An eye-tracking system (200) comprising:
a plurality of light-emitting units (202a, 202b, 202c, 202d);
a light-sensing arrangement (100, 204) comprising:
a light sensor (102) comprising a plurality of light-sensitive elements (104a, 104b, 104c) which collectively form a light-sensitive surface (106) of the light sensor (102); and
a light collimation element (108) arranged on the light-sensitive surface of the light sensor (102), wherein the light collimation element defines an angle of acceptance (θₐ) for each light-sensitive element of the light sensor (102) to lie within a field of view (θₜ) of said light-sensitive element in which a user's eye (206) is expected to be present; and
at least one processor (208) configured to:
control the plurality of light-emitting units to emit the light towards the user's eye;
collect sensor data, wherein the sensor data comprises information of reflections of the emitted light from the user's eye, wherein the reflections are received by the light sensor (102) within the angle of acceptance for each light-sensitive element; and
process the collected sensor data to determine a gaze direction of the user's eye.

9. The system (200) according to claim 8, wherein each (202a) of the plurality of light-emitting units (202a, 202b, 202c, 202d) comprises at least one of:
- a light source (302) operable to generate the light to be emitted towards the user's eye (310),
- a reflector (304) operatively coupled to the light source for directing the generated light towards the user's eye, and
- a light collimating element (306) operatively coupled to the reflector for collimating the directed light from the reflector towards the user's eye.

10. A method (200) comprising:
controlling a plurality of light-emitting units (202a, 202b, 202c, 202d) to emit light towards a user's eye;
collecting sensor data from a light sensor (102), wherein the sensor data comprises information of reflections of the emitted light from the user's eye,
wherein the reflections are received by the light sensor (102) within an angle of acceptance defined by a light collimation element (108) for each light-sensitive element from a plurality of light sensitive elements (104a, 104b, 104c) of the light sensor (102); and
processing the collected sensor data to determine a gaze direction of the user's eye.

11. The method of claim 10, wherein each (202a) of the plurality of light-emitting units (202a, 202b, 202c, 202d) comprises at least one of:
- a light source (302) operable to generate the light to be emitted towards the user's eye (310),
- a reflector (304) operatively coupled to the light source for directing the generated light towards the user's eye, and
- a light collimating element (306) operatively coupled to the reflector for collimating the directed light from the reflector towards the user's eye.

12. The method of any of claims 10 or 11, wherein the light collimation element (108) is implemented as one of: a prismatic film, a fibre optic plate-based film, a privacy filter film, a combination of lenticular arrays and aperture arrays.

13. The method of any of claims 10-12, wherein the light collimation element (108) is configured to have one of a planar structure or a curved structu re.

14. The method of any of claims 10-13, wherein a thickness of the light collimation element (108) lies in a range of 200 micrometres to 1.5 millimetres.

15. The method of any of claims 10-14, wherein a thickness (T1) of the arrangement of the light collimation element (108) and the plurality of light-sensitive elements of the light sensor (102) lies in a range of a range of 100 µm to 1 mm.
